# EUROPEAN PATENT APPLICATION

(11) **EP 4 407 137 A1**
(43) Date of publication of application: **31.07.2024**
(21) Application number: 22873012.3
(22) Date of filing: 22.09.2022
(51) Int. Cl.: E06B 9/13, E06B 9/56, E06B 5/00

(54) **ROLL SCREEN DEVICE**

(30) Priority: 24.09.2021 JP 2021155372
(71) Applicant: LIXIL Corporation, Tokyo 141-0033 (JP)
(72) Inventor: ISHII, Hisashi, 141-0033 Tokyo (JP)
(74) Representative: karo IP
(86) International application number: PCT/JP2022/035494
(87) International publication number: WO 2023/048261

(57) **Abstract**

A roll screen device 10 arranged at an opening of a building includes: a screen part 14 that is formed into a sheet shape; a solar cell 28 that is provided in the screen part 14; a holding part 17 that suspends and holds the screen part 14; frames 15 and 16 that are arranged on the respective sides of the screen part 14; and a charge and discharge control board 23 that is housed inside the frame 16 and that controls charging and discharging of electric power generated in the solar cell 28.

## Description

### TECHNICAL FIELD

The present invention relates to a roll screen device including a solar cell.

### BACKGROUND ART

In the related art, a roll screen device in which a solar cell is provided in a screen part is known (see, for example, Patent Literature 1).

### RELATED-ART LITERATURE

### PATENT LITERATURE

Patent Literature 1: JP 2011-179193

### SUMMARY OF INVENTION

### TECHNICAL PROBLEM

However, how to use generated power is not disclosed in roll screen devices having a conventional power generation function as disclosed in Patent Literature 1.

The present disclosure addresses the issue described above, and a purpose thereof is to provide a technology that allows for effective use of generated power in roll screen devices that include solar cells.

### SOLUTION TO PROBLEM

To solve the problem above, a roll screen device according to one embodiment of the present invention is a roll screen device that is arranged at an opening of a building and includes: a screen part that is formed into a sheet shape; a solar cell that is provided in the screen part; a holding part that suspends and holds the screen part; a frame that is arranged on a side of the screen part; and a charge and discharge control board that is housed inside the frame and that controls charging and discharging of electric power generated in the solar cell.

### BRIEF DESCRIPTION OF DRAWINGS

[Fig. 1] Fig. 1 is a schematic perspective view for explaining a roll screen device according to the first embodiment.
[Fig. 2] Fig. 2 is a schematic perspective view for explaining a roll screen device according to the second embodiment.

### DESCRIPTION OF EMBODIMENTS

Hereinafter, the present invention will be described based on preferred embodiments with reference to the drawings. The following configuration is for illustrative purposes for understanding the present disclosure, and the scope of the present disclosure is determined only by the scope of the attached claims. The same or equivalent constituting elements and members illustrated in each drawing shall be denoted by the same reference numerals, and duplicative explanations will be omitted appropriately. The dimension of members in the drawings are enlarged or reduced as appropriate to facilitate understanding. Some of the components in each figure may be omitted if they are not important for explanation.

### First Embodiment

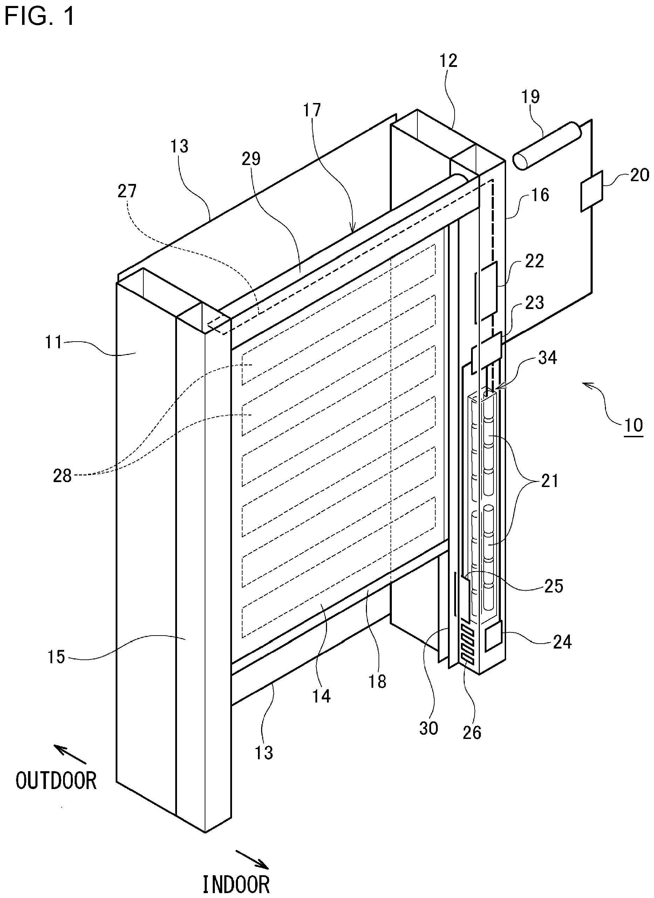

Fig. 1 is a schematic perspective view for explaining a roll screen device 10 according to the first embodiment. This roll screen device 10 is used while being attached to an opening of a building. In the embodiment shown in FIG. 1, the opening of the building is formed by frame materials as mullions (vertical frames) 11 and 12 extending in the vertical direction and transoms (horizontal frames that are not shown) extending in the horizontal direction. A glass panel 13 is arranged on the outdoor side of the opening of the building. The glass panel 13 is attached to the mullions 11 and 12 by a predetermined support means such as a structural sealant. The roll screen device 10 is arranged on the indoor side of the opening of the building.

The roll screen device 10 includes a screen part 14, a holding part 17 that suspends and holds the screen part 14, guide rails 30 that guide the raising and lowering of the screen part 14, and a pair of frames 15 and 16 that have a built-in charging/discharging control board and the like and are useful in forming the guide rails 30.

The screen part 14 is formed into a rectangular sheet-shape body having flexibility. In this screen part 14, the upper end part in the longitudinal direction thereof is connected to a winding mechanism in the holding part 17, and a bottom rail 18 is provided at the lower end part thereof. The bottom rail 18 exerts an effect of applying force in the direction of pulling down the screen part 14 in the downward direction and imparting tension to the screen part 14 so as to increase flatness.

The screen part 14 has a plurality of solar cells 28 built therein. In the example shown in FIG. 1, a plurality of rectangular solar cells 28 are arranged side by side in the vertical direction (height direction); however, the size, shape, and arrangement method of the solar cells 28 are not particularly limited, and any size, shape, and arrangement are possible. For example, a plurality of solar cells 28 having a square shape in planar view may be arranged in a matrix pattern throughout the entire screen part 14. In general, matrix arrangement is often used in crystalline silicon solar cells. The solar cells 28 are structured to utilize the photovoltaic effect and convert light energy into electric power.

The electric power generated by each solar cell 28 is taken out from the upper end of the screen part 14 by a wire 27. At this time, the wire 27 may be taken out via a winding drum 29 attached to the holding part 17 holding the screen part 14.

The holding part 17 includes the winding drum 29 for winding up the screen part 14 and a tubular motor 19 for rotating the winding drum 29. In the embodiment shown in FIG. 1, the tubular motor 19 is illustrated outside the holding part 17 for explanation; however, in reality, the tubular motor 19 is arranged such that the rotor is located inside the winding drum 29. The driving of the tubular motor 19 allows the screen part 14 to be raised or lowered.

The guide rails 30 are arranged at the respective left and right ends of the screen part 14, and are structured so as to sandwich the end parts of the screen part 14. The guide rails 30 are fixed to side surfaces of the frames 15 and 16. The screen part 14 having the built-in solar cells 28 has the property that wrinkles and uneven surfaces are more likely to occur compared to a fabric screen that does not have built-in solar cells. By providing the guide rails 30, wrinkles and uneven surfaces of the screen part 14 can be reduced. Further, by providing the guide rails 30, light leakage and heat leakage from the side of the screen part 14 can be prevented, and the light shielding performance, heat shielding performance, and heat insulation performance can thus be improved. Gaps between the guide rails 30 and the screen part 14 may be filled with mohair or the like. The guide rails 30 may be fixed to the side surfaces of the mullions 11 and 12, respectively. Alternatively, gaps may be provided between the mullion 11 and the frame 15 and between the mullion 12 and the frame 16, respectively, such that the guide rails 30 are fixed while being sandwiched by the mullion 11 and the frame 15 and the mullion 12 and the frame 16 at the respective ends thereof.

The frames 15 and 16 are hollow square pillars and are arranged on the sides of the screen part 14 such that the longitudinal direction thereof is parallel to the longitudinal direction of the mullions. The frame 15 is attached to the mullion 11, and the frame 16 is attached to the mullion 12. The fixing method of the frames and the respective mullions is not particularly limited and may be screw fastening, adhesion, fitting, welding, or the like. The pair of frames 15, 16 are arranged at intervals depending on the width of the opening.

In another embodiment, the frames 15 and 16 may be members having a U-shaped cross section arranged such that the longitudinal direction thereof is parallel to the longitudinal direction of the mullions. Further, the frames 15 and 16 may be fixed to the transom or stool at the top and bottom and may be glued to the mullions 11 and 12.

In the roll screen device 10 according to the present embodiment, a charge and discharge unit 34 that charges and discharges the electric power generated by the solar cells 28 is housed in the frame 16. The charge and discharge unit 34 includes a motor control board 20, a maximum power point tracking (MPPT) control board 22, a charge and discharge control board 23, a communication control board 24, a power supply board 25, storage batteries (BMU battery management unit) 21, an external power connector, a breaker, and a fan where the fan is at the top of the frame 16. These various boards and the storage batteries 21 are housed in the frame 16. However, the communication control board 24 is not limited to be inside the frame 16 and may be arranged in a place where communication can be appropriately performed as appropriate according to the communication method. When the communication control board 24 is housed in the frame 16, an opening for wireless communication may be provided in the frame. When the communication control board 24 is arranged outside the frame 16, the communication control board 24 may be arranged on the upper part of the holding part 17, for example. Further, a power supply port 26 for supplying electric power to an external electronic device is arranged on a side surface of the frame 16. The location for arranging the power supply port 26 is not limited to the side surface and can be arranged at any location of the frame 16. The power supply port 26 may be, for example, a USB port or a DC jack. In FIG. 1, the various boards and the storage batteries 21 are shown transparently for explanation; however, in reality, they are housed inside the frame 16 and thus cannot be seen from the outside. Further, in FIG. 1, the motor control board 20 is illustrated outside the frame 16 for convenience; however, the motor control board 20 is housed inside the frame 16 in reality. The motor control board 20 may be arranged inside the holding part 17 or on the upper part of the holding part 17.

The MPPT control board 22 follows the maximum operating point during power generation in real time according to changes in weather conditions. The charge and discharge control board 23 controls charging and discharging to the storage batteries 21. The communication control board 24 performs communication control with an external mobile terminal such as a smartphone. The power supply board 25 is a board that controls the supply of electric power to the outside via the power supply port 26. The motor control board 20 uses the electric power stored in the storage batteries 21 so as to perform drive control of the tubular motor 19.

Thus, in the roll screen device 10 according to the present embodiment, all components that perform power generation, charging, and power supply are integrated, and by simply attaching this roll screen device 10 to an opening in a building, the functions of power generation, charging, and power supply can be realized. Since the frames 15 and 16 are separate bodies from the mullions 11 and 12, retrofitting to an existing building is easy.

When the electric power generated by the solar cells 28 is charged to a storage battery located far away, the wire length becomes long, and in addition to the need to secure wiring space for this purpose, the construction becomes more complicated; also, there is a possibility that power loss will increase. On the other hand, in the roll screen device 10 according to the present embodiment, since the electric power generated by the solar cells 28 can be charged to the storage battery 21 housed inside the nearby frame 16, the generated electric power can be effectively used.

Further, in the roll screen device 10 according to the present embodiment, the tubular motor 19 is driven using electric power generated by itself. Since there is no need to supply electric power separately from the outside, this is extremely efficient and can save energy. In addition, it is possible to supply power from the outside (external power connector) in case of a failure, etc.

Further, in the roll screen device 10 according to the present embodiment, a power supply port 26 is provided on a side surface of the frame 16. For example, a portable information terminal such as an LED lighting, a desktop fan, or a smartphone can be charged from the power supply port 26, and the generated electric power can be effectively used.

In the above-described embodiment, the charge and discharge unit 34 is housed only in one frame 16; however, a part or the entire structure of the charge and discharge unit may be arranged in the other frame 15. Further, a plurality of PV modules may be arranged (two or more in parallel) for one frame housing a charge and discharge circuit.

### Second Embodiment

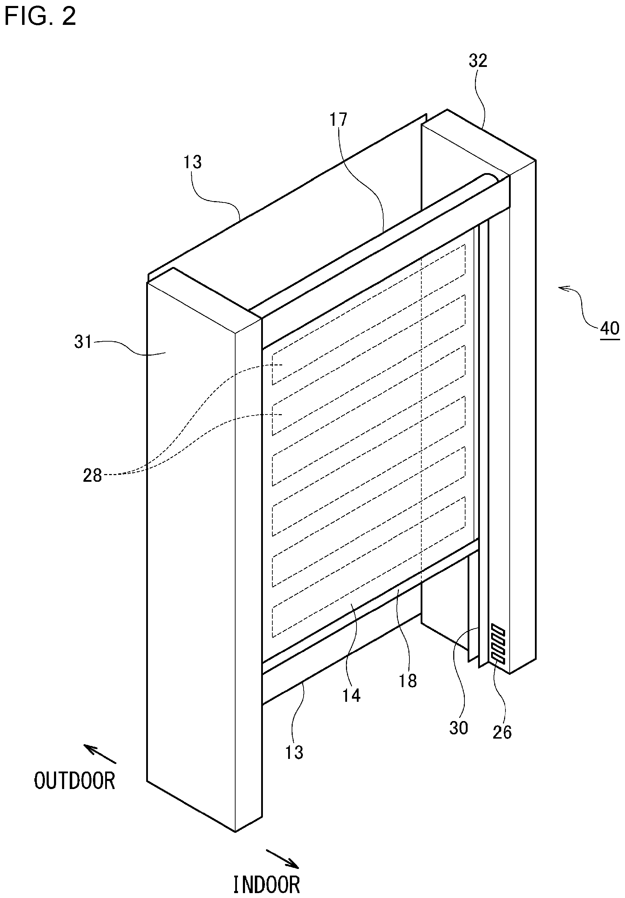

Fig. 2 is a schematic perspective view for explaining a roll screen device 40 according to the second embodiment. This roll screen device 40 has a configuration in which a charge and discharge unit including various boards and storage batteries inside mullions 31 and 32 that form openings. That is, the mullions 31 and 32 in the second embodiment can be considered as the frames 11 and 12 and the mullions 15 and 16 in the first embodiment described above that are integrally formed. The holding part 17 may be supported by the mullions 31 and 32. While the roll screen device 10 according to the first embodiment is suitable for retrofitting to an existing building, the roll screen device 40 according to the second embodiment is considered to be suitable for installation at the time of new construction of a building. At that time, the mullions 31 and 32 are preferably provided with a door for performing maintenance of a charge and discharge circuit and the like.

The roll screen device according to the above embodiment is structured to include a storage battery inside a frame; however, in another embodiment, a roll screen device may be structured such that the frame does not t include a storage battery and that the charge and discharge control board housed in the frame controls charging and discharging of an external storage battery via a power supply port. In this case as well, since electric power generated by the solar cells 28 can be controlled by a nearby charge and discharge control board, the generated electric power can be effectively used.

Described above is an explanation of the present invention based on the embodiments. These embodiments are intended to be illustrative only, and it will be obvious to those skilled in the art that various modifications and changes can be developed within the scope of the claims of the present invention and that such modifications and changes are also within the scope of the claims of the present invention. Therefore, the descriptions and figures in the specification should be treated demonstratively instead of being treated in a limited manner.

### INDUSTRIAL APPLICABILITY

The present invention is applicable to a roll screen device including a solar cell.

### REFERENCE SIGNS LIST

10, 40 roll screen device, 11, 12, 31, 32 mullion, 13 glass panel, 14 screen part, 15, 16 frame, 17 holding part, 18 bottom rail, 19 tubular motor, 20, motor control board, 21 storage battery, 22 MPPT control board, 23 charge and discharge control board, 25 power supply board, 26 power supply port, 27 wire, 28 solar cell, 29 winding drum, 30 guide rail, 34 charge and discharge unit

## Claims

1. A roll screen device arranged at an opening of a building, comprising:
a screen part that is formed into a sheet shape;
a solar cell that is provided in the screen part;
a holding part that suspends and holds the screen part;
a frame that is arranged on a side of the screen part; and
a charge and discharge control board that is housed inside the frame and that controls charging and discharging of electric power generated in the solar cell.

2. The roll screen device according to Claim 1, further comprising a storage battery that is controlled by the charge and discharge control board housed inside the frame.

3. The roll screen device according to Claim 1 or 2, further comprising an MPPT control board housed inside the frame.

4. The roll screen device according to any one of Claims 1 through 3, wherein the frame is formed integrally with a vertical frame of the opening.

5. The roll screen device according to any one of Claims 1 through 3, wherein the frame is formed as a separate body from a vertical frame of the opening and is attached to the vertical frame by an attachment member.

6. The roll screen device according to Claim 2, further comprising:
an electric motor for raising and lowering the screen part,
wherein the electric motor is driven by electric power stored in the storage battery.

7. The roll screen device according to any one of Claims 1 through 6, wherein the frame includes a power supply port for supplying electric power to an external electronic device.
